(19) 

**Europäisches Patentamt**

**European Patent Office**

**Office européen des brevets**

(11) **EP 4 088 834 A1**

(12) **EUROPEAN PATENT APPLICATION**
published in accordance with Art. 153(4) EPC

(43) Date of publication:
**16.11.2022 Bulletin 2022/46**

(21) Application number: **20911927.0**

(22) Date of filing: **26.10.2020**

(51) International Patent Classification (IPC):
**B22C 1/00** *(2006.01)*        **B22C 1/18** *(2006.01)*

(52) Cooperative Patent Classification (CPC):
**B22C 1/00; B22C 1/02; B22C 1/10; B22C 1/18**

(86) International application number:
**PCT/JP2020/040089**

(87) International publication number:
**WO 2021/140725 (15.07.2021 Gazette 2021/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.01.2020   JP 2020001013
09.09.2020   JP 2020151412**

(71) Applicant: **Kao Corporation
Chuo-ku
Tokyo 103-8210 (JP)**

(72) Inventors:
• **AONUMA, Hiroaki
Toyohashi-shi, Aichi 441-8074 (JP)**
• **INA, Yoshimitsu
Toyohashi-shi, Aichi 441-8074 (JP)**

(74) Representative: **Hoffmann Eitle
Patent- und Rechtsanwälte PartmbB
Arabellastraße 30
81925 München (DE)**

(54) **INORGANIC COATED SAND**

(57)    Inorganic coated sand includes: a refractory aggregate; and an inorganic binder layer formed on a surface of the refractory aggregate, wherein an inorganic binder contains at least one selected from sodium silicate and sodium metasilicate, the inorganic binder layer contains a calcium compound, and a Ca content in the inorganic binder layer is 3% by mass or more and 45% by mass or less.

**Description**

TECHNICAL FIELD

The present invention relates to inorganic coated sand.

BACKGROUND ART

As a casting mold used for casting a cast metal, for example, a mold obtained by molding into a desired shape using inorganic coated sand that includes a refractory aggregate and an inorganic binder layer formed on a surface of the refractory aggregate has been known.

Examples of the technology related to such inorganic coated sand include those disclosed in Patent Document 1 (Japanese Examined Patent Publication No. S53-025803), Patent Document 2 (Pamphlet of International Publication No. WO2018/147419), and Patent Document 3 (Pamphlet of International Publication No. WO2018/097180).

Patent Document 1 discloses a method of manufacturing a casting mold in which an alkali metasilicate solution adjusted by previously adding caustic alkali to water glass is added to refractory particles such as silica sand and the resultant is kneaded, or alcohols are further added during the kneading, crystalline alkali silicate is precipitated and deposited on surfaces of the refractory particles such as the silica sand, and then particulate blended sand obtained by adding and mixing fine-particle dust containing $SiO_2$ as a main component, generated during Fe-Si refining, is heated to at least a temperature equal to or higher than a melting point of the crystalline alkali silicate and cured.

Patent Document 2 discloses a casting mold material composition at least containing a refractory aggregate, a binding material containing water glass as an essential component, and a nitrate at least one selected from the group consisting of alkali metal salts of nitric acid and alkaline earth metal salts.

Patent Document 3 discloses a technology related to a coated sand in dry state having fluidity at ambient temperature, in which a surface of refractory aggregate is coated with a coating layer containing water glass, and spherical particles are contained in the coating layer.

RELATED DOCUMENT

PATENT DOCUMENT

[Patent Document 1] Japanese Examined Patent Publication No. S53-025803
[Patent Document 2] Pamphlet of International Publication No. WO2018/147419
[Patent Document 3] Pamphlet of International Publication No. WO2018/097180

SUMMARY OF THE INVENTION

According to the present invention, there is provided a method of reducing deformation of a casting mold during casting, wherein in the casting mold manufactured by using inorganic coated sand that includes a refractory aggregate and an inorganic binder layer formed on a surface of the refractory aggregate, an inorganic binder contains at least one selected from sodium silicate and sodium metasilicate, the inorganic binder layer contains a calcium compound, and a Ca content in the inorganic binder layer is set in a range of 3% by mass or more and 45% by mass or less.

According to the present invention, there is provided inorganic coated sand including: a refractory aggregate; and an inorganic binder layer formed on a surface of the refractory aggregate, wherein an inorganic binder contains at least one selected from sodium silicate and sodium metasilicate, the inorganic binder layer contains a calcium compound, and a Ca content in the inorganic binder layer is 3% by mass or more and 45% by mass or less.

BRIEF DESCRIPTION OF THE DRAWINGS

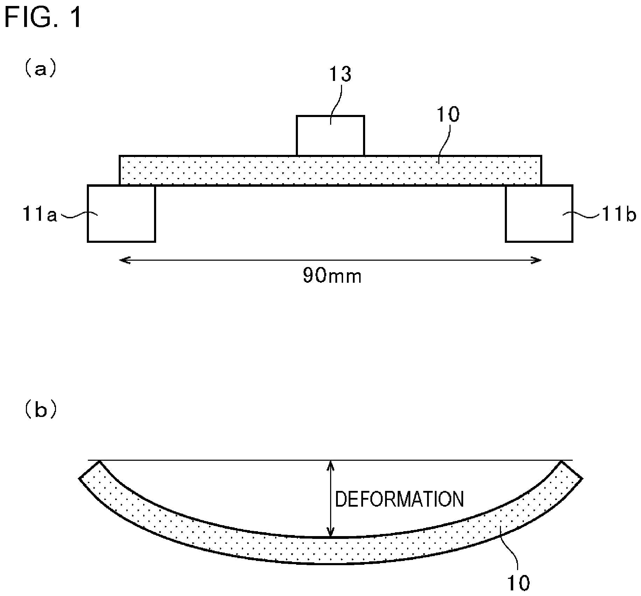

[FIG. 1] A cross-sectional view for illustrating a method of measuring deformation of a casting mold in an example.

DESCRIPTION OF EMBODIMENTS

According to the study by the present inventors, the present inventors have newly found that when a casting mold having a complicated and thin shape is manufactured with the conventional inorganic coated sand, the casting mold is exposed to a molten metal at high temperatures during casting and deformed, such that there is a room for improvement in dimensional accuracy.

The present invention provides a method of reducing deformation of a casting mold during casting in the casting mold manufactured by using inorganic coated sand. In addition, the present invention provides inorganic coated sand that reduces deformation of the casting mold formed during casting.

The present inventors have found that deformation of the casting mold can be reduced during casting by containing a calcium compound in the inorganic binder layer, in a casting mold manufactured by using inorganic coated sand that includes a refractory aggregate and an inorganic binder layer formed on a surface of the refractory aggregate.

According to the present invention, it is possible to provide a method of reducing deformation of the casting mold during casting in the casting mold manufactured by using inorganic coated sand. In addition, according to the present invention, it is possible to provide inorganic coated sand that reduces deformation of the casting mold during casting.

Hereinafter, embodiments of the present invention will be described in detail. In the present specification, "A to B" indicating a numerical range indicates a range of A or more and B or less, and includes both values. The configurations and elements described in the embodiments can be appropriately combined as long as the advantageous effects of the invention are not impaired.

<Method of Reducing Deformation of Casting Mold during Casting>

According to the present embodiment, in a method of reducing deformation of a casting mold during casting, in the casting mold manufactured by using inorganic coated sand that includes a refractory aggregate and an inorganic binder layer formed on a surface of the refractory aggregate, an inorganic binder contains at least one selected from sodium silicate and sodium metasilicate, the inorganic binder layer contains a calcium compound, and a Ca content in the inorganic binder layer is set in a range of 3% by mass or more and 45% by mass or less.

(Mechanism of Deformation Reduction)

In the present embodiment, specifically, by containing a specific amount of the calcium compound in the inorganic binder layer of the inorganic coated sand, heat of the molten metal causes sodium silicate or sodium metasilicate to react with calcium during casting to crystallize the reactant into a high melting point ternary crystal of $Na_2O \cdot CaO \cdot SiO_2$. Since the high melting point crystal does not melt even when exposed to the heat of the molten metal, the deformation of the casting mold can be effectively reduced. The present inventors have newly found that the deformation of the casting mold can be reduced by manufacturing a casting mold using such inorganic coated sand.

Hereinafter, the inorganic coated sand and the method of manufacturing a casting mold will be described in more detail.

<Inorganic Coated Sand>

The inorganic coated sand includes a refractory aggregate and an inorganic binder layer formed on a surface of the refractory aggregate. An inorganic binder contains at least one selected from sodium silicate and sodium metasilicate. The inorganic binder layer contains a calcium compound, and a Ca content in the inorganic binder layer is 3% by mass or more and 45% by mass or less.

The inorganic coated sand is specifically composed of particle groups of the inorganic coated sand, and the refractory aggregate is specifically composed of particle groups of the refractory aggregate.

The inorganic coated sand preferably has a spherical shape in terms of improving fluidity and further improving a filling property into a molding die. Here, the spherical shape of the inorganic coated sand means a ball-like round shape.

More specifically, sphericity of the inorganic coated sand is preferably 0.80 or more, more preferably 0.85 or more, even more preferably 0.90 or more, still more preferably 0.95 or more, and further more preferably 0.97 or more, in terms of improvement in fluidity, quality of the casting mold, and strength of the casting mold, or easiness of molding the casting mold. In addition, an upper limit of the sphericity is specifically 1 or less.

Here, the sphericity of the inorganic coated sand can be determined by analyzing an image (photograph) of particles obtained by using an optical microscope or a digital microscope (for example, VH-8000 manufactured by KEYENCE CORPORATION), determining an area of a cross section of projected particles and a perimeter of the cross section, and calculating [perimeter (mm) of perfect circle with the same area as the area ($mm^2$) of cross section of projected particles] / [perimeter (mm) of cross section of projected particles], and then averaging values each obtained for any 50 particles.

An average particle diameter of the inorganic coated sand is preferably 0.05 mm or more, and more preferably 0.1 mm or more, in terms of improvement in quality of the casting mold and strength of the casting mold, or easiness of molding the casting mold. Further, when the average particle diameter of the inorganic coated sand is the lower limit or more described above, an amount of the inorganic binder layer used can be reduced during the manufacture of the casting mold, which is preferable in terms of easiness of reproduction of the inorganic coated sand.

The average particle diameter of the inorganic coated sand is preferably 2 mm or less, more preferably 1 mm or less, and even more preferably 0.5 mm or less in terms of improvement in quality of the casting mold and strength of the casting mold, or easiness of molding the casting mold. In addition, when the average particle diameter of the inorganic coated sand is the upper limit or less described above, a porosity during the manufacture of the casting mold is reduced, which is preferable in terms of increasing the strength of the casting mold.

In the present embodiment, the average particle diameter of the inorganic coated sand and an average particle diameter of the refractory aggregate to be described later can be specifically measured by the following method.

(Method of Measuring Average Particle Diameter)

When the sphericity obtained from the cross section of the projected particles is 1, a diameter (mm) is measured. On the other hand, when the sphericity < 1, a major axis diameter (mm) and a minor axis diameter (mm) of particles randomly oriented are measured to determine (major axis diameter + minor axis diameter)/2, and values each obtained for any 100 particles are averaged to obtain an average particle diameter (mm) . The major axis diameter and the minor axis diameter are defined as follows. When the particles are stabilized on a plane and a projected image of the particles on the plane is sandwiched between two parallel lines, a width of the particles as a minimum distance between the parallel lines is referred to as the minor axis diameter, whereas a distance when the particles are sandwiched between the two parallel lines in a direction perpendicular to the parallel lines is referred to as the major axis diameter.

The major axis diameter and the minor axis diameter of the particles can be determined by capturing an image (photograph) of the particles with an optical microscope or a digital microscope (for example, VH-8000 manufactured by KEYENCE CORPORATION), and analyzing the obtained image.

(Refractory Aggregate)

Examples of materials of the refractory aggregate include one or more selected from the group consisting of natural sand and artificial sand.

Examples of the natural sand include one or two or more selected from the group consisting of silica sand containing quartz as a main component, chromate sand, zircon sand, olivine sand, and alumina sand.

Examples of artificial sand include one or two or more selected from the group consisting of synthetic mullite sand, $SiO_2$-based foundry sand containing $SiO_2$ as a main component, $Al_2O_3$-based foundry sand containing $Al_2O_3$ as a main component, $SiO_2/Al_2O_3$-based foundry sand, $SiO_2/MgO$-based foundry sand, $SiO_2/Al_2O_3/ZrO_2$-based foundry sand, $SiO_2/Al_2O_3/Fe_2O_3$-based foundry sand, and slag-derived foundry sand. Here, the main component means the most abundant component among the components contained in the sand.

The artificial sand refers not to foundry sand produced from nature but to foundry sand in which a metal oxide component is artificially prepared and melted or sintered. In addition, recovered sand obtained by recovering the used refractory aggregate, recycled sand obtained by reproducing the recovered sand, and the like can also be used as the artificial sand.

The refractory aggregate is preferably in a form of particles in terms of improving fluidity of the inorganic coated sand and further improving in filling property into the molding die.

Further, an average particle diameter of the refractory aggregate is preferably 0.05 mm or more, and more preferably 0.1 mm or more, in terms of improvement in quality of the casting mold and a strength of the casting mold, or easiness of molding the casting mold. Further, when the average particle diameter of the refractory aggregate is the lower limit or more described above, an amount of the inorganic binder layer used can be reduced during the manufacture of the casting mold, which is preferable in terms of easiness of reproduction of the inorganic coated sand.

The average particle diameter of the refractory aggregate is preferably 2 mm or less, more preferably 1 mm or less, and even more preferably 0.5 mm or less, in terms of improvement in quality of the casting mold and a strength of the casting mold, or easiness of molding the casting mold. In addition, when the average particle diameter of refractory aggregate is the upper limit or less described above, a porosity during the manufacture of the casting mold is reduced, which is preferable in terms of increasing the strength of the casting mold.

(Inorganic Binder Layer)

Specifically, the inorganic binder layer contains an inorganic binder and a calcium compound.

The inorganic binder layer is a coating layer formed on the surface of the refractory aggregate. Specifically, the inorganic binder layer is a layer coated with a mixture of the inorganic binder, the calcium compound and, if necessary, a compound of Na source or Si source; a layer further coated with the calcium compound and, if necessary, the compound of Na source or Si source on the layer coated with the mixture of the inorganic binder and, if necessary, at least one compound selected from the compounds of Na source and Si source; or a layer further coated with the calcium compound, and if necessary, at least one compound selected from the compounds of Na source and Si source on the layer coated with the mixture of the inorganic binder, the calcium compound and, if necessary, at least one compound selected from the compounds of Na source and Si source.

A content of the inorganic binder layer in the inorganic coated sand is preferably 0.05 parts by mass or more, more preferably 0.1 parts by mass or more, even more preferably 0.5 parts by mass or more, still more preferably 1 part by mass or more, and further more preferably 2 parts by mass or more with respect to 100 parts by mass of the refractory aggregate, in terms of improving a strength of the casting mold.

In addition, the content of the inorganic binder layer in the inorganic coated sand is preferably 10 parts by mass or less, more preferably 8 parts by mass or less, and even more preferably 7 parts by mass or less with respect to 100 parts by mass of the refractory aggregate, in terms of improving a filling property into the molding die and improving a strength of the casting mold.

Here, the content of the inorganic binder layer means a content of the inorganic binder layer excluding water.

Next, components contained in the inorganic binder layer will be described.

(Inorganic Binder)

In the present embodiment, the inorganic binder contains at least one selected from sodium silicate and sodium metasilicate in terms of excellent productivity and availability.

In terms of improving productivity of the inorganic coated sand and productivity of the casting mold, the inorganic binder preferably contains sodium metasilicate or a hydrate thereof, and more preferably contains sodium metasilicate hydrate.

The inorganic binder may further contain a water-soluble silicic acid compound other than the above as a main component. Specific examples of the silicic acid compound other than sodium silicate and sodium metasilicate include potassium silicate, potassium metasilicate, lithium silicate, and ammonium silicate.

Specific examples of the sodium silicate include one or two or more selected from the group consisting of sodium silicate Nos. 1 to 5. Here, the sodium silicate is classified into Nos. 1 to 5 according to a molar ratio of $SiO_2/Na_2O$, and sodium silicates Nos. 1 to 3 are defined in JIS-K-1408. Specific molar ratio of $SiO_2/Na_2O$ in each No. is as follows.

Sodium silicate No. 1: molar ratio of $SiO_2/Na_2O$ = 2.0 to 2.3
Sodium silicate No. 2: molar ratio of $SiO_2/Na_2O$ = 2.4 to 2.6
Sodium silicate No. 3: molar ratio of $SiO_2/Na_2O$ = 2.8 to 3.3
Sodium silicate No. 4: molar ratio of $SiO_2/Na_2O$ = 3.3 to 3.5
Sodium silicate No. 5: molar ratio of $SiO_2/Na_2O$ = 3.6 to 3.8

Further, the molar ratio of $SiO_2/Na_2O$ may be adjusted to a desired degree by mixing two or more kinds of sodium silicate.

Sodium metasilicate is preferably a hydrate in terms of improving productivity of the inorganic coated sand and improving productivity of the casting mold.

The sodium metasilicate hydrate is, from the above viewpoints, preferably at least one selected from sodium metasilicate pentahydrate and sodium metasilicate nonahydrate.

The content of the inorganic binder in the inorganic binder layer is preferably 5% by mass or more, more preferably 10% by mass or more, even more preferably 15% by mass or more, still more preferably 18% by mass or more, and yet still more preferably 30% by mass or more, with respect to entire inorganic binder layer, in terms of improving a strength of the casting mold and improving a surface shape of the casting mold.

In addition, the content of the inorganic binder in the inorganic binder layer is preferably 85% by mass or less, more preferably 70% by mass or less, even more preferably 60% by mass or less, still more preferably 55% by mass or less, and yet still more preferably 48% by mass or less with respect to the entire inorganic binder layer, in terms of further reducing deformation of the casting mold at high temperatures.

Here, the content of the inorganic binder in the inorganic binder layer means a content of the inorganic binder excluding water with respect to a total amount of components other than water in the inorganic binder layer.

A total content of sodium silicate and sodium metasilicate in the inorganic binder is preferably 80% by mass or more, more preferably 90% by mass or more, even more preferably 95% by mass or more, still more preferably 98% by mass or more, and yet still more preferably substantially 100% by mass, in terms of improvement in strength of the casting mold, excellent productivity, and availability. The "substantially" as used herein means that unintentionally contained components, for example, components other than sodium silicate and sodium metasilicate in sodium silicate and sodium metasilicate which are raw materials may be contained.

The total content of sodium silicate and sodium metasilicate in the inorganic binder refers to a total content of sodium silicate and sodium metasilicate with respect to a total amount of components other than water in the inorganic binder.

(Calcium Compound)

The calcium compound preferably contains a Ca salt of an inorganic compound in terms of reducing deformation of the casting mold at high temperatures.

The content of the Ca salt of the inorganic compound in the calcium compound is preferably 80% by mass or more, more preferably 90% by mass or more, even more preferably 95% by mass or more, and still more preferably 98% by mass or more, in terms of reducing deformation of the casting mold at high temperatures . An upper limit of the content of the Ca salt of the inorganic compound in the calcium compound is 100% by mass.

It is considered that the calcium compound is dissolved in sodium silicate or an aqueous sodium metasilicate solution during curing the casting mold, and a part of the dissolved resultant reacts with sodium silicate or sodium metasilicate to improve the strength of the casting mold. Therefore, the calcium compound preferably has solubility in water.

On the other hand, if the solubility in water is too high, the reaction between sodium silicate or sodium metasilicate and the calcium compound proceeds excessively, and calcium silicate gel is excessively formed, such that it is considered that liquid crosslinking by the inorganic binder is reduced and the strength of the casting mold is reduced.

Therefore, the solubility of the calcium compound in water at 20°C is preferably 0.001 g/L or more, and more preferably 0.005 g/L in terms of increasing the strength of the casting mold, and in the same terms thereof, preferably 10 g/L or less, more preferably 5 g/L or less, even more preferably 3 g/L or less, still more preferably 1.5 g/L or less, yet still more preferably 0.5 g/L or less, even still more preferably 0.1 g/L or less, and even yet still more preferably 0.01 g/L or less.

The solubility of each calcium salt in water is as follows: calcium carbonate (25°C, 0.015 g/L), calcium silicate (20°C, 0.01 g/L), calcium oxide (25°C, 1.19 g/L), calcium sulfate (20°C, 2.4 g/L), and calcium sulfate (dihydrate) (20°C 2.1 g/L).

Examples of the Ca salt of the inorganic compound include one or two or more Ca salts selected from the group consisting of calcium oxide, calcium carbonate, calcium silicate, calcium sulfate, calcium nitrate, and calcium phosphate.

The calcium compound is preferably at least one selected from calcium oxide and calcium carbonate, and more preferably calcium oxide, in terms of reducing deformation of the casting mold at high temperatures.

The calcium compound is preferably a calcium compound having low water-solubility, more preferably at least one selected from calcium carbonate, calcium silicate, and calcium oxide, and even more preferably at least one selected from calcium carbonate and calcium silicate, in terms of improving a strength of the casting mold.

Further, calcium carbonate is preferable in terms of achieving both reduction of deformation of the casting mold at high temperatures and improvement in strength of the casting mold.

Further, other examples of the calcium compound include compounds containing calcium among those to be described later as other components contained in the inorganic binder layer.

A Ca content in the inorganic binder layer is 3% by mass or more, preferably 7% by mass or more, more preferably 15% by mass or more, and even more preferably 16% by mass or more with respect to a total amount of components other than water in the inorganic binder layer, in terms of reducing deformation of the casting mold.

In addition, the Ca content in the inorganic binder layer is 45% by mass or less, preferably 40% by mass or less, more preferably 35% by mass or less, and even more preferably 33% by mass or less with respect to a total amount of components other than water in the inorganic binder layer, in terms of improving a strength of the casting mold.

A specific method of measuring the Ca content in the inorganic binder layer will be described later.

(Other Additives)

In addition to the above-mentioned components, various additives may be contained in the inorganic binder layer, if necessary. Examples of other additives include a moisturizing agent, a moisture resistance improving agent, a coupling agent that strengthens the bond between the refractory aggregate and the inorganic binder, a lubricant, and a surfactant.

Examples of the moisturizing agent include a polyol, a water-soluble polymer, hydrocarbons, sugars, protein, and an inorganic compound other than those described above. Among them, examples of the inorganic compound preferably include a compound containing calcium such as calcium chloride in terms of adjusting the calcium content.

Examples of the moisture resistance improving agent include metal oxide such as calcium oxide described above, carbonate such as calcium carbonate, borate such as calcium borate, sulfate such as calcium sulfate, and phosphates such as calcium phosphate.

Examples of the lubricant include waxes; fatty acid amides; alkylene fatty acid amides; stearic acids; stearyl alcohol; metal stearic acid salts such as lead stearate, zinc stearate, calcium stearate, and magnesium stearate; stearic acid monoglyceride; stearyl stearate; and hydrogenated oil.

Examples of a release agent include paraffin, wax, light oil, machine oil, spindle oil, insulating oil, waste oil, vegetable oil, fatty acid ester, organic acid, graphite fine particles, mica, vermiculite, a fluorine-based release agent, and silicone-based release agent.

(Molar Ratio of Na:Ca:Si)

The molar ratio of Na:Ca:Si in the inorganic binder layer is preferably 15 to 85:5 to 75:10 to 80, more preferably 15 to 77:13 to 75:10 to 72, even more preferably 20 to 70:20 to 70:10 to 60, and still more preferably 22 to 62:28 to 68:10 to 50, in terms of reducing deformation of the casting mold and improving the strength of the casting mold.

Here, the molar ratio of Na:Ca:Si can be specifically adjusted by adjusting the content of the inorganic binder and the content of the calcium compound in the inorganic binder layer. Furthermore, in addition to the inorganic binder and calcium compound described above, the molar ratio can be adjusted by adding a sodium compound as a Na source and a silicon compound as a Si source to the inorganic binder layer. The sodium compound is preferably an inorganic sodium compound other than sodium silicate and sodium metasilicate in terms of reducing deformation of the casting mold, and specific examples thereof include sodium compounds such as sodium carbonate, sodium hydrogen carbonate, sodium hydroxide, sodium oxide, sodium phosphate, sodium hydrogen phosphate, sodium sulfate, sodium tetraborate, and sodium metaborate. The silicon compound is preferably an inorganic silicon compound other than sodium silicate and sodium metasilicate in terms of reducing deformation of the casting mold, and specific examples thereof include silicon compounds such as amorphous silica (molten silica, fumed silica, precipitated silica, and the like), crystalline silica, and ferrosilicon.

Further, when other additives described above contain Ca, Na, and Si, Ca, Na, and Si are contained in the molar ratio of Na:Ca:Si in the inorganic binder layer.

The silicon compound other than sodium silicate and sodium metasilicate is further preferably contained in the inorganic binder layer in terms of improving a strength of the casting mold and improvement in moisture resistance of the casting mold. As the silicon compound, amorphous silica is preferably used in terms of high reactivity with sodium silicate and sodium metasilicate. Preferred examples of amorphous silica will be described later.

The molar ratio of Na:Ca:Si in the inorganic binder layer can be determined, for example, from a raw material composition used in production of the inorganic coated sand.

Further, the molar ratio of Na:Ca:Si can be determined, for example, by analysis of the inorganic coated sand. Specifically, the molar ratio of Na:Ca:Si is determined by the following method.

The inorganic coated sand is immersed in water or hot water to extract the inorganic binder layer, and the refractory aggregate is removed from an extract liquid by filtration. The obtained elute is dried to obtain an inorganic binder layer extract. The inorganic binder layer extract is subjected to fluorescent X-ray analysis under the following conditions to determine the Ca content and the Na:Ca:Si molar ratio in the inorganic binder layer.

That is, the inorganic binder layer extract is adjusted to 0.1 $\mu$m or less with a vibration mill and heated at 1,050°C for 1 hour. Thereafter, 5 g of lithium tetraborate and 0.5 g of the inorganic binder layer extract are mixed, heated at 1,200°C for 10 minutes, and melted, and then cooled to prepare a glassy sample (glass bead method). The sample is subjected to the fluorescent X-ray analysis by a fundamental parameter (FP) method using a fluorescent X-ray analyzer ZSX Primus II (manufactured by Rigaku Corporation). From the obtained analysis result of mass ratios of $Na_2O$, $CaO$, and $SiO_2$, the Ca content and the Na:Ca:Si molar ratio are calculated.

When the mass ratios of $Na_2O$, $CaO$, and $SiO_2$ are defined as a (wt%), b (wt%), and c (wt%), respectively, the Ca content and the Na:Ca:Si molar ratio can be determined by the following equations, respectively.

- Ca content with respect to 100 parts by mass of inorganic binder layer: b × 40.1 (Ca atomic weight)/56.1 (CaO molecular weight)
- Na:Ca:Si Molar Ratio

```
Na molar ratio = (a × 2/62.0)/(a × 2/62.0 + b/56.1 + c/60.1)
```

```
Ca molar ratio = (b/56.1)/(a × 2/62.0 + b/56.1 + c/60.1)
```

```
Si molar ratio = (c/60.1)/(a × 2/62.0 + b/56.1 + c/60.1)
```

(Amorphous Silica)

The amorphous silica is preferably amorphous silica particles in terms of a large specific surface area and high reactivity with sodium silicate and sodium metasilicate.

More specifically, a degree of amorphization of the amorphous silica particles is preferably 80% or more, more preferably 90% or more, even more preferably 93% or more, still more preferably 95% or more, and further more preferably 98% or more, in terms of more firmly binding particles of the inorganic coated sand via the amorphous silica particles. An upper limit of the degree of amorphization of the amorphous silica particles is not limited, but may be, for example, 100% or less, 99.8% or less, or 99% or less.

An average particle diameter $d_{50}$ in a weight-based particle size distribution of the amorphous silica particles measured by a laser diffraction scattering type particle size distribution measurement method is preferably 0.1 $\mu$m or more, and more preferably 0.3 $\mu$m or more, in terms of improvement in strength of the casting mold per unit mass or a handling property. In addition, the average particle diameter $d_{50}$ of the amorphous silica particles is preferably 2.0 $\mu$m or less, more preferably 1.0 $\mu$m or less, even more preferably 0.8 $\mu$m or less, and still more preferably 0.6 $\mu$m or less, in terms of improvement in strength of the casting mold per unit mass.

Here, the average particle diameter $d_{50}$ in the weight-based particle size distribution of the amorphous silica particles measured by the laser diffraction scattering type particle size distribution measurement method may be obtained by, for example, dissolving the inorganic binder layer in water and removing the inorganic binder layer from the inorganic coated sand, taking the amorphous silica particles out, and then measuring particle sizes of the obtained amorphous silica particles by the laser diffraction scattering type particle size distribution measurement method.

Further, the average particle diameter $d_{50}$ in the weight-based particle size distribution of the amorphous silica particles measured by the laser diffraction scattering type particle size distribution measurement method may be obtained by measuring particle sizes of the amorphous silica particles, which are raw materials, by the laser diffraction scattering type particle size distribution measurement method.

Further, an average particle diameter of the amorphous silica particles, determined from an image observed with a scanning electron microscope, is preferably 0.1 $\mu$m or more, and more preferably 0.3 $\mu$m or more, in terms of improvement in strength of the casting mold per unit mass or improvement in handling property. In addition, the average particle diameter of the amorphous silica particles, obtained from the image observed with the scanning electron microscope, is preferably 2.0 $\mu$m or less, more preferably 1.0 $\mu$m or less, even more preferably 0.8 $\mu$m or less, and still more preferably 0.6 $\mu$m or less, in terms of improvement in strength of the casting mold per unit mass. Here, various image analysis methods can be used to determine the average particle diameter of the amorphous silica particles from the image observed with the scanning electron microscope. Sorting of irregular particles may be performed as a pretreatment. For example, after the inorganic binder layer and the amorphous silica particles are determined on the basis of the elements, any 100 amorphous silica particles are selected, the diameters thereof are measured. An average value of particle diameters of 80 amorphous silica particles, excluding 10 particles counted in order of decreasing diameter from the maximum particle diameter and 10 particles counted in order of increasing diameter from the minimum particle diameter, that is, total 20 amorphous silica particles, may be defined as the average particle diameter of the amorphous silica particles.

A content of water in the inorganic binder layer contained in the inorganic coated sand is preferably 5 parts by mass or more, more preferably 10 parts by mass or more, and even more preferably 20 parts by mass or more with respect to 100 parts by mass of the inorganic binder, in terms of obtaining a high-strength casting mold.

Further, the content of water in the inorganic binder layer contained in the inorganic coated sand is preferably 180 parts by mass or less, more preferably 160 parts by mass or less, even more preferably 150 parts by mass or less, and still more preferably 140 parts by mass or less with respect to 100 parts by mass of the inorganic binder, in terms of a filling property into the molding die and obtaining a high-strength casting mold.

The content of water in the inorganic binder layer contained in the inorganic coated sand can be adjusted according to a type of the inorganic binder.

When the inorganic binder is sodium silicate, the content of water in the inorganic binder layer is preferably 5 parts by mass or more, more preferably 10 parts by mass or more, and even more preferably 20 parts by mass or more with respect to 100 parts by mass of sodium silicate, in terms of obtaining a high-strength casting mold.

In addition, the content of water in the inorganic binder layer contained in the inorganic coated sand is preferably 55 parts by mass or less, with respect to 100 parts by mass of sodium silicate, preferably 50 parts by mass of the inorganic binder, in terms of a filling property into the molding die and obtaining a high-strength casting mold.

When the inorganic binder is sodium metasilicate, the content of water in the inorganic binder layer is preferably 60 parts by mass or more, more preferably 65 parts by mass or more, even more preferably 90 parts by mass or more, and still more preferably 110 parts by mass or more with respect to 100 parts by mass of sodium metasilicate, in terms of obtaining a high-strength casting mold and easily manufacturing a casting mold. In addition, the content of water in the inorganic binder layer is preferably 180 parts by mass or less, more preferably 160 parts by mass or less, even more preferably 150 parts by mass or less, and still more preferably 140 parts by mass or less, in terms of improving fluidity and further improving a filling property into the molding die.

For example, when the inorganic binder constituting the inorganic binder layer is only sodium metasilicate pentahydrate, the content of water is 74 parts by mass with respect to 100 parts by mass of sodium metasilicate, and when the inorganic binder constituting the inorganic binder layer is only sodium metasilicate nonahydrate, the content of water is 133 parts by mass with respect to 100 parts by mass of sodium metasilicate.

<Method of Producing Inorganic Coated Sand>

A method of producing the inorganic coated sand can be selected, for example, according to a type of the inorganic binder.

When the inorganic binder contains sodium silicate, an inorganic coated sand in a dry state having fluidity at ambient temperature can be obtained by, for example, adding a water glass aqueous solution as an inorganic binder to the heated refractory aggregate, if necessary, with an additive, kneading and uniformly mixing the resultant, coating the water glass aqueous solution to the surface of the refractory aggregate, and evaporating moisture of the water glass aqueous solution.

When the inorganic binder contains a sodium metasilicate hydrate, for example, an inorganic coated sand in a dry state can be obtained by a producing method including: mixing the refractory aggregate and sodium metasilicate hydrate at a temperature of equal to or higher than a melting point of the sodium metasilicate hydrate to obtain a mixture; and cooling the mixture at a temperature of lower than the melting point of the sodium metasilicate hydrate.

According to such a producing method, since the inorganic binder layer can be crystallized, it is possible to obtain inorganic coated sand having excellent fluidity as compared with the conventional producing method. In addition, since it is not necessary to use an aqueous solution of the sodium metasilicate hydrate, there is no need for a dehydration step, which can simplify the method of producing the inorganic coated sand.

In the obtaining the mixture, specifically, the surface of the refractory aggregate is coated with the fluidized sodium metasilicate hydrate at a temperature equal to or higher than the melting point of the sodium metasilicate hydrate.

Examples of the method of mixing the refractory aggregate and the sodium metasilicate hydrate at a temperature equal to or higher than the melting point of the sodium metasilicate hydrate include: a method of putting the sodium metasilicate hydrate into the refractory aggregate that is heated to a temperature equal to or higher than the sodium metasilicate hydrate and mixing the refractory aggregate and the sodium metasilicate hydrate while melting the sodium metasilicate hydrate; and a method of putting the heated and melted sodium metasilicate hydrate into the refractory aggregate and mixing them.

Among them, the method of putting the heated and melted sodium metasilicate hydrate into the refractory aggregate and mixing them is preferable in terms of shortening a coating time.

In the same terms thereof, in the obtaining the mixture, mixing the mixture without using the sodium metasilicate hydrate as an aqueous solution in advance is preferable. Further, the obtaining the mixture preferably does not include intentionally adding water.

When the refractory aggregate and the sodium metasilicate hydrate are mixed, mixing conditions such as a stirring speed, a treatment time, and the like can be appropriately determined depending on a treatment amount of the mixture.

In the cooling the mixture, the mixture obtained in the obtaining the mixture is cooled to a temperature lower than the melting point of the sodium metasilicate hydrate to reduce fluidity of the sodium metasilicate hydrate, and the sodium metasilicate hydrate is fixed to the surface of the refractory aggregate to form a sodium metasilicate hydrate layer, that is, an inorganic binder layer.

Further, in the production of the inorganic coated sand, the method of adding the calcium compound is not limited. For example, the refractory aggregate may be coated with the inorganic binder and, if necessary, other additives, the Na source compound, or the Si source compound described above, and then coated with the calcium compound and, if necessary, other additives, the Na source compound, or the Si source compound.

Alternatively, the refractory aggregate may be coated together with the inorganic binder, the calcium compound and, if necessary, the other additives, the Na source compound, or the Si source compound.

Alternatively, the refractory aggregate may be coated together with the inorganic binder, the calcium compound and, if necessary, other additives, the Na source compound, or the Si source compound, and then coated with the calcium compound or, if necessary, other additives, the Na source compound, or the Si source compound.

The calcium compound can be in a form of solid, an aqueous solution, or an aqueous dispersion and mixed with the refractory aggregate, the inorganic binder, and the like.

Further, the calcium compound may be added all at once or in a plurality of times.

When the calcium compound is mixed in a form of solid, the calcium compound is preferably fine particles, an average particle diameter of the calcium compound is more preferably 100 $\mu$m or less, even more preferably 50 $\mu$m or

less, and still more preferably 30 μm or less, in terms of improving reactivity with the inorganic binder. In addition, the average particle diameter of the calcium compound is preferably 0.1 μm or more, and more preferably 0.5 μm or more, in terms of easiness of handling and availability.

Specifically, the average particle diameter of the calcium compound can be measured by using the following measuring method.

(Method of Measuring Average Particle Diameter)

The average particle diameter of 50% cumulative volume is measured by using a laser diffraction type particle size distribution measuring device LA-960V2 (manufactured by HORIBA, Ltd.). The analysis conditions are as follows.

- Measurement method: flow method
- Dispersion medium: methanol
- Dispersion method: stirring, built-in ultrasonic waves 3 minutes
- Sample concentration: 2 mg/100 cc
- Refractive index: refractive index of each calcium compound (calcium carbonate: 1.580, calcium oxide: 1.830, calcium sulfate: 1.520, calcium silicate: 1.615)

By the above method, the inorganic coated sand in the present embodiment can be obtained.

In addition, the obtained inorganic coated sand can be used alone or in combination with other known refractory aggregates or other additives to mold a desired casting mold.

<Casting Mold>

In the present embodiment, a casting mold is manufactured by using the inorganic coated sand in the present embodiment described above. Examples of a method of molding a casting mold include a molding method using a heated molding die, a molding method in which steam is further aerated in the heated molding die, and then hot air is aerated.

When the inorganic binder layer contains sodium metasilicate hydrate, a method of molding a casting mold by filling the inorganic coated sand into the heated molding die is preferable. When the inorganic binder layer contains sodium silicate, a method of molding a casting die by adding water to the inorganic coated sand, kneading, and then filling the resultant into the molding die, or a method of molding a casting mold by filling the inorganic coated sand into the heated molding die, aerating the steam, and then aerating the hot air is preferable.

When the inorganic binder layer contains sodium metasilicate hydrate, in the molding method using the heated molding die, for example, first, the inorganic coated sand is filled in a molding die for providing a desired casting mold.

Here, preferably, the molding die is kept warm by heating in advance before filling the inorganic coated sand thereinto, in terms of improving productivity of the casting mold. In this case, a heating temperature of the molding die is preferably 100°C or higher, more preferably 150°C or higher, and preferably 300°C or lower, and more preferably 250°C or lower, in terms of improving productivity of the casting mold and improvement in strength of the casting mold.

After filling the inorganic coated sand, the molding die is heated without aeration of the steam to cure the inorganic coated sand. When the inorganic binder layer contains sodium metasilicate hydrate, the inorganic coated sand can be cured without using adding water to the inorganic coated sand and kneading the resultant, or aerating the steam, such that there is no need for equipment to aerate the steam.

The heating temperature of the molding die is preferably 100°C or higher, more preferably 150°C or higher, and preferably 300°C or lower, and more preferably 250°C or lower, in terms of improving productivity of the casting mold and improving a strength of the casting mold. In addition, a heating time of the molding die is preferably 30 seconds or longer, and more preferably 60 seconds or longer, and preferably 600 seconds or shorter, in terms of obtaining the stable strength of the casting mold.

Further, when the inorganic binder layer contains sodium silicate, water is added to the inorganic coated sand, kneaded, and then heated to fill the resultant into the molding die. Moreover, in the molding method of aerating the steam, for example, the inorganic coated sand is filled into the molding die for providing a desired casting mold, and the steam is then blown into the casting mold. A filling phase of the inorganic coated sand is moistened by aeration of the steam and becomes a wet state. The hot air is then blown into the molding die heated to 90 to 200°C to dry and cure the inorganic coated sand.

Further, the inorganic coated sand in the present embodiment can also be used in an additive manufacturing method.

Although the embodiments of the present invention have been described above, these are mere examples of the present invention, and various other configurations other than those given above may be adopted.

<1> A method of reducing deformation of a casting mold during casting, wherein in the casting mold manufactured by using inorganic coated sand that includes a refractory aggregate and an inorganic binder layer formed on a surface of the refractory aggregate, an inorganic binder contains at least one selected from sodium silicate and sodium metasilicate, the inorganic binder layer contains a calcium compound, and a Ca content in the inorganic binder layer is set in a range of 3% by mass or more and 45% by mass.

<2> The method of reducing deformation of a casting mold during casting according to <1>, wherein in the casting mold manufactured by using the inorganic coated sand that includes the refractory aggregate and the inorganic binder layer formed on the surface of the refractory aggregate, a content of the inorganic binder layer is 0.05 parts by mass or more and 10 parts by mass or less with respect to 100 parts by mass of the refractory aggregate in the inorganic coated sand, the inorganic binder contains at least one selected from sodium silicate and sodium metasilicate, the inorganic binder layer contains the calcium compound, the Ca content in the inorganic binder layer is set in the range of 3% by mass or more and 45% by mass, and a molar ratio of Na:Ca:Si in the inorganic binder layer is set in a range of 15 to 85:5 to 75:10 to 80.

<3> The method of reducing deformation of a casting mold according to <1> or <2>, wherein a total content of the sodium silicate and the sodium metasilicate in the inorganic binder is 80% by mass or more.

<4> The method of reducing deformation of a casting mold according to any one of <1> to <4>, wherein the calcium compound contains a Ca salt of an inorganic compound.

<5> The method of reducing deformation of a casting mold according to <4>, wherein a content of a Ca salt of an inorganic compound in the calcium compound is 80% by mass or more.

<6> The method of reducing deformation of a casting mold according to any one of <1> to <5>, wherein solubility of the calcium compound in water at 20°C is 0.001 g/L or more and 10 g/L or less.

<7> Inorganic coated sand including: a refractory aggregate; and an inorganic binder layer formed on a surface of the refractory aggregate, wherein an inorganic binder contains at least one selected from sodium silicate and sodium metasilicate, the inorganic binder layer contains a calcium compound, and a Ca content in the inorganic binder layer is 3% by mass or more and 45% by mass or less.

<8> The inorganic coated sand according to <7>, wherein the inorganic coated sand includes the refractory aggregate and the inorganic binder layer formed on the surface of the refractory aggregate, a content of the inorganic binder layer is 0.05 parts by mass or more and 10 parts by mass or less with respect to 100 parts by mass of the refractory aggregate in the inorganic coated sand, the inorganic binder contains at least one selected from sodium silicate and sodium metasilicate, the inorganic binder layer contains the calcium compound, the Ca content in the inorganic binder layer is 3% by mass or more and 45% by mass or less, and a molar ratio of Na:Ca:Si in the inorganic binder layer is 15 to 85:5 to 75:10 to 80.

<9> The inorganic coated sand according to <7> or <8>, wherein a total content of the sodium silicate and the sodium metasilicate in the inorganic binder is 80% by mass or more.

<10> The inorganic coated sand according to any one of <7> to <9>, wherein the calcium compound contains a Ca salt of an inorganic compound.

<11> The inorganic coated sand according to <10>, wherein a content of a Ca salt of an inorganic compound in the calcium compound is 80% by mass or more.

<12> The inorganic coated sand according to any one of <7> to <11>, wherein solubility of the calcium compound in water at 20°C is 0.001 g/L or more and 10 g/L or less.

[Example]

Hereinafter, the present invention will be described with reference to Examples and Comparative Examples, but the present invention is not limited thereto.

First, raw materials used in the following examples are shown.

(Raw Materials Used to Produce Inorganic Coated Sand)

- Refractory Aggregate

  Espearl #60L (manufactured by Yamakawa Sangyo Co., Ltd., Japan, artificial alumina sand, average particle diameter: 241 μm)
  Mikawa silica sand R6 (manufactured by Mikawa Silica Sand Kabushiki Kaisha, average particle diameter: 200 μm)

- Inorganic Binder

    Sodium metasilicate nonahydrate ($Na_2SiO_3 \cdot 9H_2O$) (manufactured by Nippon Chemical Industrial CO., LTD.)
    No. 1 50 water glass ($SiO_2/Na_2O$ = 2.1) (manufactured by FUJI CHEMICAL CO., LTD.)

- Amorphous Silica Fine Particles
  Denka molten silica SFP-20M (average particle diameter $d_{50}$: 0.4 $\mu$m, degree of amorphization: 99.5% by mass or more) (manufactured by Denka Company Limited)
- Calcium Salt

    Calcium carbonate ($CaCO_3$) (manufactured by FUJIFILM Wako Pure Chemical Corporation, powder, average particle diameter: 6 $\mu$m)
    Calcium oxide (CaO) (manufactured by FUJIFILM Wako Pure Chemical Corporation, powder, average particle diameter: 19 $\mu$m)
    Calcium sulfate (dihydrate) ($CaSO_4 \cdot 2H_2O$) (manufactured by FUJIFILM Wako Pure Chemical Corporation, powder, average particle diameter: 38 $\mu$m)
    Calcium silicate ($CaSiO_3$) (manufactured by FUJIFILM Wako Pure Chemical Corporation, powder, average particle diameter: 11 $\mu$m)

- Sodium carbonate (anhydrous) (manufactured by FUJIFILM Wako Pure Chemical Corporation)

<Examples 1 and 2>

Espearl #60L (100 parts by mass) as a refractory aggregate was put into a mixer. Next, sodium metasilicate nonahydrate (amount listed in Table 1) melted by heating at 80°C was added to the mixer and kneaded for 4 minutes. Further, calcium carbonate (amount listed in Table 1) was added to the resultant, and kneading was performed for 2 minutes to obtain inorganic coated sand of Examples 1 and 2. Table 1 shows a blending composition of the inorganic coated sand.

<Examples 3 to 18>

Espearl #60L (100 parts by mass) or Mikawa silica sand R6 (100 parts by mass) as a refractory aggregate was added to the mixer. Next, sodium metasilicate nonahydrate (amount listed in Table 2) melted by heating to 80°C was added to the mixer and kneaded for 4 minutes, at least one of amorphous silica fine particles and sodium carbonate (amounts listed in Table 2) was added to the resultant, and kneading was performed for 2 minutes. Next, calcium salt (amount listed in Table 2) was added to the resultant and kneaded for 2 minutes to obtain inorganic coated sand of Examples 3 to 18. Table 2 shows a blending composition of the inorganic coated sand of each example.

<Example 19>

Espearl #60L (100 parts by mass) obtained by heating to about 120°C as a refractory aggregate was added to the mixer. Next, No. 1 50 water glass (2 parts by mass) was added to the mixer and kneaded to evaporate moisture, and the mixture was stirred for about 3 minutes until an aggregate of sand particles collapsed. Further, calcium carbonate (0.78 parts by mass) was added to the resultant, and kneading was performed for 2 minutes to obtain inorganic coated sand of Example 19. Table 3 shows a blending composition of the inorganic coated sand.

<Comparative Example 1>

Inorganic coated sand of Comparative Example 1 was obtained in the same manner as in Example 1 except that calcium carbonate was not added. Table 1 shows a blending composition of the inorganic coated sand.

<Comparative Example 2>

Inorganic coated sand of Comparative Example 2 was obtained in the same manner as in Example 3 except that calcium carbonate was not added. Table 2 shows a blending composition of the inorganic coated sand.

<Comparative Example 3>

Inorganic coated sand of Comparative Example 3 was obtained in the same manner as in Example 15 except that calcium carbonate was not added. Table 2 shows a blending composition of the inorganic coated sand.

<Comparative Example 4>

Inorganic coated sand of Comparative Example 4 was obtained in the same manner as in Example 19 except that calcium carbonate was not added. Table 3 shows a blending composition of the inorganic coated sand.

(Evaluation Method)

A casting mold was manufactured by using the inorganic coated sand obtained in each example by the following method, and deformation of the casting mold was evaluated. The evaluation results are shown in each table.

(Manufacture of Casting Mold)

<Examples 1 to 18 and Comparative Examples 1 to 3>

A die of test pieces (5 pieces) of 22.3 × 22.3 × 180 mm was heated to 200°C. As for the inorganic coated sand of each example, the inorganic coated sand was filled into the die at a blow pressure of 0.45 MPa using a CSR-43 blow molding machine. The inorganic coated sand was then left for 2 minutes in the molding die to be cured to obtain a casting mold test piece.

<Example 19 and Comparative Example 4>

Water (1 part by mass) was added to the inorganic coated sand (100 parts by mass) in advance and kneaded for 2 minutes, and the inorganic coated sand was then filled into the molding die by the same operation as in Examples 1 to 18 and Comparative Examples 1 to 3 to obtain a casting mold test piece.

(Deformation of Casting Mold)

FIGs. 1(a) and 1(b) are cross-sectional views for illustrating a method of measuring deformation of a casting mold. The casting mold test piece obtained by the above method was left in a thermostatic chamber at 25°C/55% RH for 1 hour, and then cut into a plate-shaped test piece 10 of 5 × 22.3 × 90 mm. Metal pedestals 11a and 11b (13 mm × 13 mm, height: 13 mm) were arranged on an iron plate having an appropriate size so that a distance between centers of the metal pedestals 11a and 11b is 90 mm, and the plate-shaped test piece 10 was placed on the metal pedestals 11a and 11b so that both ends of the plate-shaped test piece 10 were located at the centers of the pedestals, respectively (FIG. 1(a)). Further, a weight 13 (4.7 g) was placed on the center of the plate-shaped test piece 10. Thereafter, the iron plate on which the plate-shaped test piece 10 was placed was heated in a muffle furnace heated under the following conditions. After a lapse of a predetermined time, the plate-shaped test piece 10 was taken out from the muffle furnace and left to cool for 1 hour. An amount of deformation of the plate-shaped test piece 10 was then measured. A maximum vertical distance from a straight line connecting the both ends of the plate-shaped test piece 10 to a curved portion was defined as the amount of deformation (FIG. 1 (b)).

(Heating Conditions)

Examples 1 to 2 and Comparative Example 1: 1,000°C, 10 minutes
Examples 3 to 18 and Comparative Examples 2 and 3: 700°C, 10 minutes
Example 19 and Comparative Example 4: 700°C, 5 minutes

[Table 1]

Table 1

| | Inorganic Coated Sand | | | | | | | | Content of Inorganic Binder Layer with respect to 100 Parts by Mass of Refractory Aggregate (Parts by Mass) | Content of Inorganic Binder in Inorganic Binder Layer (% by mass) | Deformation of Test Piece (mm) 1,000°C/10 min |
| | Refractory Aggregate | | Inorganic Binder Layer | | | | Na/Ca/Si (Molar Ratio) | Ca content in Inorganic Binder Layer (% by mass) | | | |
| | | | Inorganic Binder | | Calcium Salt | | | | | | |
| | Type | Parts By Mass | Type | Parts By Mass | Type | Parts By Mass | | | | | |
| Example 1 | Espearl #60L | 100 | Sodium Metasilicate Nonahydrate | 3.00 | Calcium Carbonate | 1.80 | 42/37/21 | 23.3 | 3.09 | 41.7 | 5 |
| Example 2 | Espearl #60L | 100 | Sodium Metasilicate Nonahydrate | 3.00 | Calcium Carbonate | 5.00 | 26/61/13 | 31.80 | 6.29 | 20.5 | 3 |
| Comparative Example 1 | Espearl #60L | 100 | Sodium Metasilicate Nonahydrate | 3.00 | - | 0.00 | 67/0/33 | 0.00 | 1.29 | 100.0 | 16 |

[Table 2]

Table 2

| | Inorganic Coated Sand | | | | | | | | | Na/Ca/Si (Molar Ratio) | Ca content in Inorganic Binder Layer (% by mass) | Content of Inorganic Binder Layer with respect to 100 Parts by Mass of Refractory Aggregate (Parts by Mass) | Content of Inorganic Binder in Inorganic Binder Layer (% by mass) | Deformation of Test Piece (mm) 700°C/10 min |
|---|---|---|---|---|---|---|---|---|---|---|---|---|---|---|
| | Refractory Aggregate | | Inorganic Binder Layer | | | | | | | | | | | |
| | | | Inorganic Binder | | Calcium Salt | | Amorphous Silica | Sodium Carbonate | | | | | | |
| | Type | Parts By Mass | Type | Parts By Mass | Type | Parts By Mass | Parts By Mass | Parts By Mass | | | | | | |
| Example 3 | Espearl #60L | 100 | Sodium Metasilicate Nonahydrate | 3.00 | Calcium Carbonate | 0.60 | 0.60 | - | 44/13/43 | 9.64 | 2.49 | 51.8 | 7 |
| Example 4 | Espearl #60L | 100 | Sodium Metasilicate Nonahvdrate | 3.00 | Calcium Carbonate | 1.20 | 0.60 | - | 39/23/38 | 15.5 | 3.09 | 41.7 | 5 |
| Example 5 | Espearl #60L | 100 | Sodium Metasilicate Nonahvdrate | 3.00 | Calcium Carbonate | 1.80 | 0.60 | - | 35/30/35 | 19.5 | 3.69 | 34.9 | 3 |
| Example 6 | Espearl #60L | 100 | Sodium Metasilicate Nonahvdrate | 4.00 | Calcium Carbonate | 2.40 | 0.80 | - | 35/30/35 | 19.5 | 4.92 | 34.9 | 0 |
| Example 7 | Espearl #60L | 100 | Sodium Metasilicate Nonahydrate | 3.00 | Calcium Oxide | 0.60 | 0.60 | - | 40/21/39 | 17.2 | 2.49 | 51.8 | 1 |
| Example 8 | Espearl #60L | 100 | Sodium Metasilicate Nonahvdrate | 3.00 | Calcium Oxide | 1.20 | 0.60 | - | 33/34/33 | 27.7 | 3.09 | 41.7 | 1 |
| Example 9 | Espearl #60L | 100 | Sodium Metasilicate Nonahvdrate | 3.00 | Calcium Sulfate | 1.60 | 0.60 | - | 42/18/40 | 10.7 | 3.49 | 36.9 | 7 |

EP 4 088 834 A1

16

| | Refractory Aggregate | | Inorganic Coated Sand | | | | | | | Na/Ca/Si (Molar Ratio) | Ca content ir Inorganic Binder Layer (% by mass) | Content of Inorganic Binder Layer with respect to 100 Parts by Mass of Refractory Aggregate (Parts bv Mass) | Content of Inorganic Binder in Inorganic Binder Layer (% by mass) | Deformation of Test Piece (mm) 700°C/ 10 min |
| | | | Inorganic Binder Layer | | | | | | | | | | |
| | | | Inorganic Binder | | Calcium Salt | | Amorphous Silica | Sodium Carbonate | | | | | |
| | Type | Parts By Mass | Type | Parts By Mass | Type | Parts By Mass | Parts By Mass | Parts By Mass | | | | | |
| Example 10 | Espearl #60L | 100 | Sodium Metasilicate Nonahvdrate | 3.00 | Calcium Silicate | 1.40 | 0.60 | - | 32/18/50 | 14.7 | 3.29 | 39.2 | 7 |
| Example 11 | Espearl #60L | 100 | Sodium Metasilicate Nonahydrate | 3.00 | Calcium Carbonate | 0.60 | 3.00 | - | 24/7/69 | 4.91 | 4.89 | 26.4 | 11 |
| Example 12 | Espearl #60L | 100 | Sodium Metasilicate Nonahvdrate | 3.00 | Calcium Oxide | 0.60 | 3.00 | - | 23/12/65 | 8.71 | 4.89 | 26.4 | 11 |
| Example 13 | Espearl #60L | 100 | Sodium Metasilicate Nonahvdrate | 3.00 | Calcium Carbonate | 0.60 | 0.60 | 0.60 | 55/10/35 | 7.77 | 3.09 | 41.7 | 7 |
| Example 14 | Espearl #60L | 100 | Sodium Metasilicate Nonahvdrate | 3.00 | Calcium Carbonate | 0.60 | - | 0.90 | 70/11/19 | 8.60 | 2.79 | 46.2 | 0 |
| Example 15 | Mikawa Silica Sand R6 | 100 | Sodium Metasilicate Nonahydrate | 4.00 | Calcium Carbonate | 0.40 | 0.80 | - | 47/7/46 | 5.48 | 2.92 | 58.8 | 9 |
| Example 16 | Mikawa Silica Sand R6 | 100 | Sodium Metasilicate Nonahvdrate | 4.00 | Calcium Carbonate | 0.80 | 0.80 | - | 44/13/43 | 9.64 | 3.32 | 51.8 | 7 |

| | Inorganic Coated Sand | | | | | | | | | | | |
| | Refractory Aggregate | | Inorganic Binder Layer | | | | | | Na/Ca/Si (Molar Ratio) | Ca content ir Inorganic Binder Layer (% by mass) | Content of Inorganic Binder Layer with respect to 100 Parts by Mass of Refractory Aggregate (Parts bv Mass) | Content of Inorganic Binder in Inorganic Binder Layer (% by mass) | Deformation of Test Piece (mm) 700°C/ 10 min |
| | | | Inorganic Binder | | Calcium Salt | | Amorphous Silica | Sodium Carbonate | | | | | |
| | Type | Parts By Mass | Type | Parts By Mass | Type | Parts By Mass | Parts By Mass | Parts By Mass | | | | | |
| Example 17 | Mikawa Silica Sand R6 | 100 | Sodium Metasilicate Nonahvdrate | 4.00 | Calcium Carbonate | 1.60 | 0.80 | - | 39/23/38 | 15.5 | 4.12 | 41.7 | 5 |
| Example 18 | Mikawa Silica Sand R6 | 100 | Sodium Metasilicate Nonahvdrate | 4.00 | Calcium Carbonate | 2.40 | 0.80 | - | 35/30/35 | 19.5 | 4.92 | 34.9 | 3 |
| Comparative Example 2 | Espearl #60L | 100 | Sodium Metasilicate Nonahydrate | 3.00 | - | - | 0.60 | - | 51/0/49 | 0.00 | 1.89 | 68.2 | 16 |
| Comparative Example 3 | Mikawa Silica Sand R6 | 100 | Sodium Metasilicate Nonahydrate | 4.00 | - | - | 0.80 | - | 51/0/49 | 0.00 | 2.52 | 68.2 | 16 |

[Table 3]

[Table 3]

Table 3

| | Inorganic Coated Sand | | | | | | Na/Ca/Si (Molar Ratio) | Ca content in Inorganic Binder Layer (% by mass) | Content of Inorganic Binder Layer with respect to 100 Parts by Mass of Refractory Aggregate (Parts by Mass) | Content of Inorganic Binder in Inorganic Binder Layer (% by mass) | Deformation of Test Piece (mm) 700°C/ 5 min |
| | Refractory Aggregate | | Inorganic Binder Layer | | | | | | | | |
| | | | Inorganic Binder | | Calcium Salt | | | | | | |
| | Type | Parts by Mass | Type | Parts by Mass | Type | Parts by Mass | | | | | |
| Example 19 | Espearl #60L | 100 | No. 1 50 Water Glass *1 | 2.00 | Calcium Carbonate | 0.78 | 35/33/37 | 11.2 | 1. 68 | 53.6 | 12 |
| Comparative Example 4 | Espearl #60L | 100 | No. 1 50 Water Glass *1 | 2.00 | - | 0.00 | 49/0/51 | 0 | 0.90 | 100.0 | 17 |
| *1 $SiO_2/Na_2O$ Molar Ratio = 2.1, Solid Content: 45% | | | | | | | | | | | |

From Tables 1 to 3, Examples had an excellent effect of reducing deformation of the casting mold compared to those of Comparative Examples.

REFERENCE SIGNS LIST

| | |
|---|---|
| 10: | plate-shaped test piece |
| 11a, 11b: | pedestal |
| 13: | weight |

**Claims**

1. A method of reducing deformation of a casting mold during casting,
   wherein in the casting mold manufactured by using inorganic coated sand that includes a refractory aggregate and an inorganic binder layer formed on a surface of the refractory aggregate, an inorganic binder contains at least one selected from sodium silicate and sodium metasilicate, the inorganic binder layer contains a calcium compound, and a Ca content in the inorganic binder layer is set in a range of 3% by mass or more and 45% by mass or less.

2. The method of reducing deformation of a casting mold according to claim 1,
   wherein a molar ratio of Na:Ca:Si in the inorganic binder layer is 15 to 85:5 to 75:10 to 80.

3. The method of reducing deformation of a casting mold according to claim 1 or 2,
   wherein a total content of the sodium silicate and the sodium metasilicate in the inorganic binder is 80% by mass or more.

4. The method of reducing deformation of a casting mold according to any one of claims 1 to 3,
   wherein the calcium compound contains a Ca salt of an inorganic compound.

5. The method of reducing deformation of a casting mold according to any one of claims 1 to 4,
   wherein a content of a Ca salt of an inorganic compound in the calcium compound is 80% by mass or more.

6. The method of reducing deformation of a casting mold according to any one of claims 1 to 5,
   wherein solubility of the calcium compound in water at 20°C is 0.001 g/L or more and 10 g/L or less.

7. The method of reducing deformation of a casting mold according to any one of claims 1 to 6,
   wherein a content of the inorganic binder layer is 0.05 parts by mass or more and 10 parts by mass or less with respect to 100 parts by mass of the refractory aggregate in the inorganic coated sand.

8. Inorganic coated sand comprising:

   a refractory aggregate; and
   an inorganic binder layer formed on a surface of the refractory aggregate,
   wherein an inorganic binder contains at least one selected from sodium silicate and sodium metasilicate, the inorganic binder layer contains a calcium compound, and a Ca content in the inorganic binder layer is 3% by mass or more and 45% by mass or less.

9. The inorganic coated sand according to claim 8,
   wherein a molar ratio of Na:Ca:Si in the inorganic binder layer is 15 to 85:5 to 75:10 to 80.

10. The inorganic coated sand according to claim 8 or 9,
    wherein a total content of the sodium silicate and the sodium metasilicate in the inorganic binder is 80% by mass or more.

11. The inorganic coated sand according to any one of claims 8 to 10,
    wherein the calcium compound contains a Ca salt of an inorganic compound.

**12.** The inorganic coated sand according to any one of claims 8 to 11,
wherein a content of a Ca salt of an inorganic compound in the calcium compound is 80% by mass or more.

**13.** The inorganic coated sand according to any one of claims 8 to 12,
wherein solubility of the calcium compound in water at 20°C is 0.001 g/L or more and 10 g/L or less.

**14.** The inorganic coated sand according to any one of claims 8 to 13,
wherein a content of the inorganic binder layer is 0.05 parts by mass or more and 10 parts by mass or less with respect to 100 parts by mass of the refractory aggregate in the inorganic coated sand.

# FIG. 1

（a）

（b）

**INTERNATIONAL SEARCH REPORT**

| International application No. |
|---|
| PCT/JP2020/040089 |

A. CLASSIFICATION OF SUBJECT MATTER
B22C 1/00(2006.01)i; B22C 1/18(2006.01)i
FI: B22C1/18 B; B22C1/00 B

According to International Patent Classification (IPC) or to both national classification and IPC

B. FIELDS SEARCHED

Minimum documentation searched (classification system followed by classification symbols)
B22C1/00; B22C1/18

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/147419 A1 (ASAHI YUKIZAI CORPORATION) 16 August 2018 (2018-08-16) paragraphs [0066], [0070], [0080], [0084] | 1–14 |
| A | JP 2018-86661 A (LIGNYTE INC.) 07 June 2018 (2018-06-07) paragraphs [0130], [0135], [0156], [0160], [0177], [0181], [0198], [0202] | 1–14 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 November 2020 (19.11.2020) | 01 December 2020 (01.12.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

International application No.

PCT/JP2020/040089

| Patent Documents referred in the Report | Publication Date | Patent Family | Publication Date |
|---|---|---|---|
| WO 2018/147419 A1 | 16 Aug. 2018 | CN 110267752 A<br>MX 2019009314 A | |
| JP 2018-86661 A | 07 Jun. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S53025803 B
- WO 2018147419 A
- WO 2018097180 A